# EUROPEAN PATENT APPLICATION

(11) **EP 2 624 124 A2**
(43) Date of publication of application: **07.08.2013**
(21) Application number: 13153624.5
(22) Date of filing: 01.02.2013
(51) Int. Cl.: G06F 3/12

(54) **Method and system for printing**

(30) Priority: 01.02.2012 US 201261593731 P
(71) Applicant: Agreeya Mobility Inc, Mountain View 94043 (US)
(72) Inventor: Subramaniam, Mandikandan Sankar, Palo Alto, CA 94304 (US); Jangala, Padma, Palo Alto, CA 94304 (US)
(74) Representative: Gulde Hengelhaupt Ziebig & Schneider

(57) **Abstract**

The embodiments herein relate to printing and, more particularly, to facilitating printing without an application to view or render. The system automatically identifies and maintains a database of printers associated with a network, in the user device. Upon receiving print request from the user device, embodiments disclosed enable conversion of the file to be printed to an intermediate format. The conversion to intermediate format may happen within the user device or in cloud based on the user device compatibility of the selected file. Further the intermediate data is converted to a printer specific format and is sent to the printer. The printer prints the information to a hard copy format.

## Description

### TECHNICAL FIELD

The embodiments herein relate to printing and, more particularly, to facilitating printing from a device wherein the device does not have an application to render. The present application is based on, and claims priority from, an US Provisional Application Number, 61593731 filed on 1st Feb, 2012.

### BACKGROUND

Printers are used to convert digital version (soft copy) of a document to a physical version in paper (hard copy). Initially, printers were used by connecting them with computers and a rendering/viewer application on the computer was required to initiate a print request to print a particular file.

In a conventional printing system, the information to be printed, which is composed by a computer is printed by transmitting the information to the printer, and then the printer carries out the printing. Printing is a multi-step process, where the user has to configure the printer with a suitable driver. The first step in printing is to discover the printer. Printers can be part of the network or can be shared through a computer. Further, networked printers may be wired or wireless. For example, a printer may be connected to a network through an Ethernet connection or may be connected to the network via a wireless connection such as WiFi or Bluetooth. The printers can be identified by corresponding IP address. In such a network, the client computer selects one of the network printers to issue or instruct the print request to the selected network printer for conducting a printing operation. The traditional approach requires a user to install one or more printer drivers corresponding to each one of the networked printers in the client computer system before using any of the network printers. This approach can be time consuming and is often simply impractical.

The method of printing a document from a device typically requires a class of device facilitating the print formatting and installing the print driver. The method of printing using a device includes storing the file to be printed in the device, a communication unit to receive printer information, a network interface unit to connect to a print server and a control unit to transmit the file to be printed to the printer with or without using a print server. Also the format of the document may vary, it can be prerendered and in a format ready for printing. This requires special applications loaded into the device in order to print on the printer. Additionally, printer software appropriate for the network printer must be installed in the device in order to enable printing from the device to the printer.

Further, the device may not have enough memory and computing power to support printer drivers. Further, at the same time, a printer driver designed for the operating system of the device might not be available and also these drivers will not support the mobile operating system natively, leading to performance issues. More over the device is often required to discover nearby printers in a new environment, which can be time-consuming and might not always be successful. Furthermore the printer discovery in such devices is limited to printers with Wi-Fi capability or they need the aid of a computer.
Therefore, current solutions to printing from a device without renderers/drivers are complicated. A hand held device like a mobile phone must follow a complicated series of steps comprising discovering the printer, downloading the software drivers, creating an account, logging into the printer and selecting the documents to be printed. Since the functionalities require addition of specific hardware and software components or else upgradation of existing, most of the mobile phones at present do not fully support these functions. Furthermore most mobile devices do not have a renderer to recognize all document formats, thereby only few type of document formats can be selected and printed. Also, there is a need for implementing security through print servers integrated with domain authentication.

### SUMMARY

In view of the foregoing, an embodiment herein provides a method for printing a file from a device, wherein the device does not comprise an application to render the file, the method comprising converting the file to an intermediate format, if the file is not compatible with the device; converting the file in the intermediate format to a format compatible with a printer by the device; and sending the file to the printer by the device.

Disclosed herein is a system for enabling printing of a file from a device, wherein the device does not comprise an application to render the file, the system configured for converting the file to an intermediate format, if the file is not compatible with the device; converting the file in the intermediate format to a format compatible with a printer; and sending the file to the printer.

Disclosed herein is a cloud network configured for converting a file to an intermediate format, on receiving the file from a device; and sending the file in the intermediate format to the device.

Disclosed herein is a device configured for converting a file to be printed to an intermediate format; converting the file in the intermediate format to a format compatible with a printer; and sending the file to the printer; wherein the device does not comprise an application to render the file.

Disclosed herein is a device configured for sending a file to be printed to a cloud network; converting the file in an intermediate format to a format compatible with a printer, wherein the file in the intermediate format is received from the cloud network; and sending the file to the printer; wherein the device does not comprise an application to render the file.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a block diagram of proposed mobile printing network as disclosed in the embodiments herein;

FIG. 2 illustrates a block diagram which shows various components of the device, as disclosed in the embodiments herein;

FIG. 3 illustrates a block diagram which shows various components of the proposed cloud network, as disclosed in the embodiments herein;

FIG. 4 illustrates a block diagram which shows various components of the proposed print subsystem as disclosed in the embodiments herein;

FIG. 5 is a flow diagram which illustrates various steps involved in the process of identifying and registering a printer to the user device, as disclosed in the embodiments herein; and

FIGs. 6a and 6b are flow diagrams which illustrate various steps involved in the process of printing a document using device, as disclosed in the embodiments herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

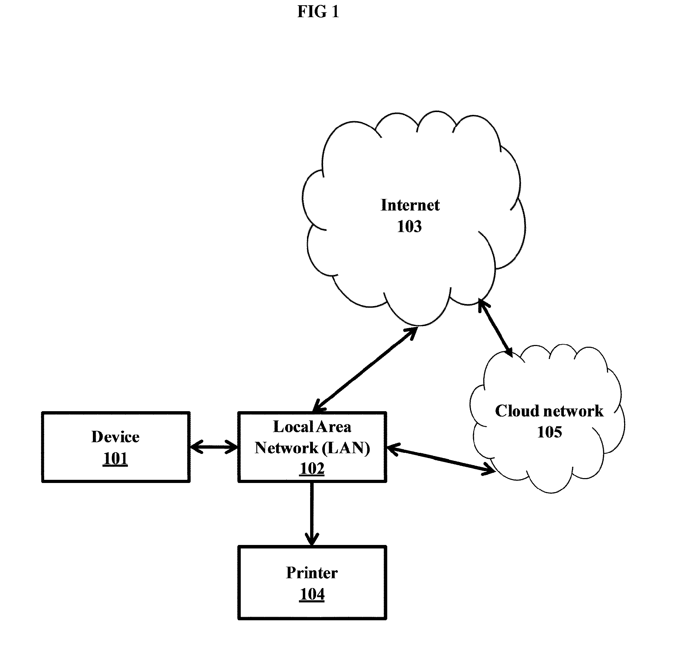

The embodiments herein disclose a system and method for facilitating printing using a device by converting the document to a printer readable format, wherein the device does not have renderers/printer software. Referring now to the drawings, and more particularly to FIGS. 1 through 6, where similar reference characters denote corresponding features consistently throughout the figures, there are shown embodiments.

FIG. 1 illustrates a block diagram of proposed printing network, as disclosed in the embodiments herein. The network comprises a device 101, a Local Area Network (LAN) 102, the internet 103, a printer 104 and a cloud network 105. Examples of the device 101 are but are not restricted to mobile phones, tablets, Personal Digital Assistants (PDAs), laptops, computers or any device without printer renderers / printer software present on the device. The device 101 is connected to the LAN 102. In one embodiment, the device 101 may be connected to the LAN 102 through a wired connection such as cables. In another embodiment, the device 101 may be connected to the LAN using a wireless connection such as Wi-Fi. The device may print a document using the printer 104. In a preferred embodiment, the device 101 have to belong to the same network (LAN) to which the printer 104 is connected.

In one embodiment, the file to be printed may be compatible with the device 101. The file is compatible with the device 101 means the device has necessary software (s) to render the selected file. In this case, the device 101 can issue a print request to the printer 104 through the LAN connection and the printer may print the file. In another embodiment, it may happen that the file to be printed is not supported by the device 101, which means the device 101 does not have necessary software (s) to render the file to be printed. In this case, the proposed system may convert the file to a printer readable format and then print the file using the printer 104. Further, in order to convert the file to the printer readable format, the proposed system may send the file to a cloud network 105. In one embodiment, the cloud network 105 may be a part of LAN 102. In another embodiment, the cloud network 105 may be a part of the internet 103. The cloud network 105 which is a part of the LAN may offer better security.

A user can initiate a print request using the device 101. The device 101 may provide a suitable user interface (UI) to initiate the print request using the proposed system. In one embodiment, the user may use the UI to initiate the print request. For example, the user can open a specific print application and may select the file to be printed using the application. Further, the application may initiate a print request. In another embodiment, the user may select a print option from a context menu and may hence initiate the print request.

Upon receiving the print request, the system may check if the file is compatible with the device 101 or not. By checking if the selected file is compatible with the device 101, the system checks if the device 101 has enough software (s) to render the selected file. If the file is compatible with the device 101 i.e. if the device 101 has necessary software(s) to render the selected file, the system may convert the file into a printable format within the device 101. Further the file in printable format is sent to the printer 104 for printing. In another embodiment, if the file is not compatible with the device 101, the system may send the file to the cloud network 105 using a secured path or by encrypting the data so as to ensure data security. Further, the system convert the file into an intermediate format using suitable applications at the cloud 105 and send the converted intermediate data back to the device 101. In one embodiment, the intermediate data may be in the form of PostScript data. Further, the system converts the intermediate data in the form of PostScript data into raster format. The raster format represents the data in the form of bitmap images.

Further the system converts data in the raster format into a printer specific format. In one embodiment, the system may consider printer specific information in order to determine the format into which the data in raster form is to be converted. In one embodiment, the printer specific information may comprise printer IP address, type of printer and so on. Further, the system may fetch the printer specific information while configuring the printer 104 to the system.

Further, the data in the printer specific format is sent to the printer. The system may use a suitable communication protocol to facilitate communication with the printer. The communication protocol used for facilitating communication with the printer 104 may be IPP, RAW and/or any such suitable protocol.

In one embodiment, the system may perform authentication of the device 101. The parameters used for authentication of the device 101 may be user name and password of the user, device credentials and so on. For example, in a particular printer network, the printer may be behind a server such as windows print server. In this scenario, the user device needs to be authenticated to access the printer. In order to authenticate the user device (device), the user has to enter a valid user name and password. Further the user name and password entered by the user may be sent to the print server which then authenticates the received information. Once the authentication is successful, then the print request is sent to the printer and the file is printed.

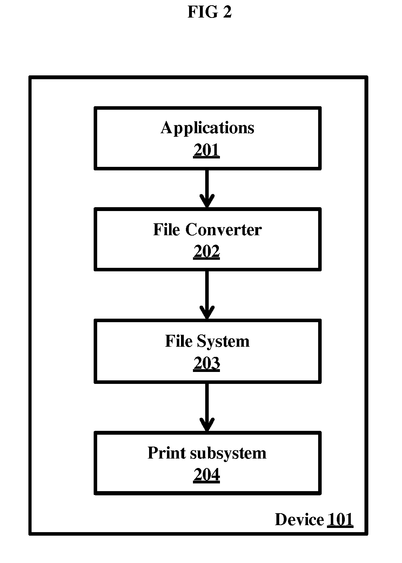

FIG. 2 illustrates a block diagram which shows various components of the device, as disclosed in the embodiments herein. The device further comprises applications 201, file converter 202, file system 203 and a print sub system 204. The device 101 may be connected to the printer 104 through a wired connection such as a cable connection or else through a wireless connection such as Wi-Fi, Ethernet and so on. Further, the printer 104 may have to be a part of a network to which the device 101 belongs. The Mobile applications 201 may refer to various types of file formats that are supported by the device 101. For example, the device 101 may support file types such as MS office document, XML/HTML, PDF and so on.

Further, in the proposed mobile printing mechanism, the document to be printed is initially converted to a specific intermediate format. The file converter 202 is used to convert files to the intermediate format. The file converter may be a PDF converter, Word converter and so on and each convertor convert the files to corresponding formats. For example, a PDF convertor may convert files in the formats such as MS office documents, text and so on, to PDF format. In the above example, the PDF convertor may convert the file to be printed to an intermediate format, i.e. the PDF format. In one embodiment, the file conversion may be performed on the device 101. For example, on receiving a print request, the system checks if the file to be printed is compatible with the device 101 or not. If the file is compatible with the device i.e. if the device 101 has sufficient software(s) to render the selected file, the file conversion is performed in the device 101. In another embodiment, the file conversion may be performed in the cloud. For example, if the file to be converted is not compatible with the device 101 i.e. if the device 101 does not have necessary software (s) to render the selected file, the system sends the file to the cloud. Further, the system performs the file conversion using suitable file conversion tool at the cloud. Further, the file in the form of intermediate data is sent back to the device 101. In a preferred embodiment, the intermediate data may be in the form of PostScript format.

Further, the converted file is stored in the file system 203 of the device 101. The file system 203 may be considered as an index or database containing physical location of every piece of data present in the physical memory of the device. For example, the data in the intermediate format may be stored in the physical memory of the device and the corresponding location is stored in the file system 101 for easy access of data.

The intermediate data in the form of PostScript format is to be further converted to a printer readable format. For this purpose, the intermediate data is sent to a print subsystem module 204. The print subsystem module 204 receives the intermediate data from the file system 203 and converts the received intermediate data to a printer readable format. For this, the print sub system 204 initially converts the received intermediate data to a raster format. Raster files are bitmap format of image files and are readable by printers. In one embodiment, the system may consider printer specific details downloaded to the device 101 at the time of printer configuration for identifying printer readable formats of the data. Further, this data may be used by the printer sub system 204 to select the format to which the raster data is to be converted.

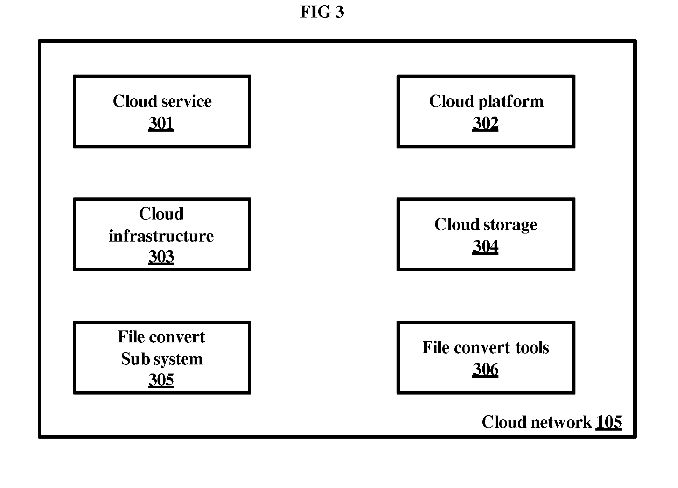

FIG. 3 illustrates a block diagram which shows various components of the proposed cloud network, as disclosed in the embodiments herein. The cloud network comprises cloud service 301, cloud platform 302, cloud infrastructure 303, cloud storage 304, file convert subsystem 305 and file convert tools 306. The cloud service 301 may comprise various services offered by the cloud network. The services offered by the cloud network 105 may comprise storage, collaboration, communication, monitoring and so on. Further, the associated user devices may receive services from the cloud network. For example, the cloud network may allow a user to receive services by acting as a virtual service environment. Further, the cloud network ensures security to the data stored and transmitted across the network. The cloud network may use encryption/decryption, secured channels, access controls and so on in order to ensure data security in the cloud network.

Further, the cloud platform 302 delivers computing platform and solution stack as a service. The cloud platform may further facilitate deployment of cloud applications 301 without cost and complexity of buying and managing underlying hardware and software layers. Further, the cloud infrastructure 303 or cloud infrastructure services may deliver a platform virtualization environment as a service.

Further, the file convert sub system 305 in the cloud network 105 provides means for facilitating conversion of files within the cloud network 105. The files sent to the cloud network for conversion are received by the file convert sub system. Further, the file convert sub system decides which tool is to be invoked to perform file conversion. In one embodiment, the file convert subsystem 305 may have access to plurality of file conversion tools 306. In another embodiment, the file convert sub system 305 may select the file conversion tool to be invoked for file conversion based on the type of file. For example, if the file to be converted to intermediate format is a pdf file, then the file convert subsystem may select tool 306 that can process the pdf file for processing and converting the received pdf file.

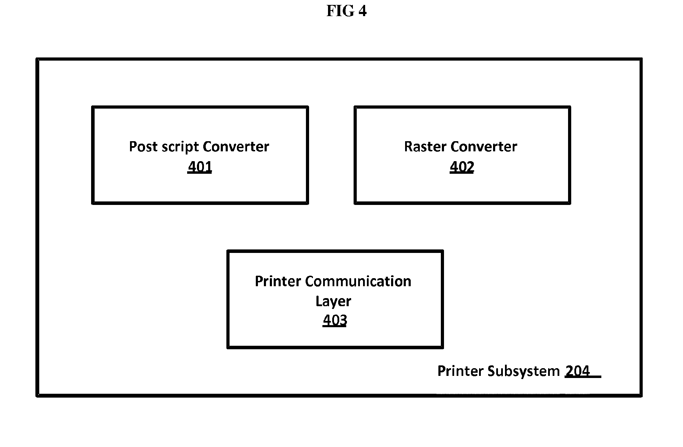

FIG. 4 illustrates a block diagram which shows various components of the proposed print subsystem as disclosed in the embodiments herein. The print sub system 204 further comprises post script convertor 401, raster converter 402 and print communication layer 403. The post script converter 401 receives file to be converted to intermediate format from the device 101 and converts the received file to an intermediate data. In a preferred embodiment, the intermediate data is in the form of PostScript format. PostScript format of data may be formed by creating images of contents of the received file. Further, the PostScript format of data may comprise Bitmap pixels. By using the PostScript format of the data, printer 104 may be able to print the image even without pixelized representation of the data.

Further, the PostScript image of the data is passed onto the raster converter 402. The raster converter 402 converts the received postscript data into raster format using a method called rasterization. The rasterization process converts the PostScript data into bitmap format. An advantage of converting the data into bitmap format is that the pixel data stored in the bitmap file may be retrieved easily using a set of coordinates that allows the data to be conceptualized as a grid. Further, the bitmap format facilitates modification of individual pixel values in the image by altering palette. Further, the bitmap files can be translated to dot-format output devices such as printers. Further, the raster format of the data is converted into a printer readable format. The printer specific formatting information may help the system to determine the format into which the intermediate data is to be converted, so as to make the data readable for the printer. The system may fetch the printer specific formatting information from the printer database being maintained in the user device 101.

Further, the printer communication layer 403 present in the print sub system 101.d is responsible for initiating and managing communication between the device 101 and the printer 104. The communication layer 403 may contain plurality of protocols that can be used to communicate with the printer. In a preferred embodiment, the system may select a best communication protocol to establish a communication session between the user device 101 and the printer 104.

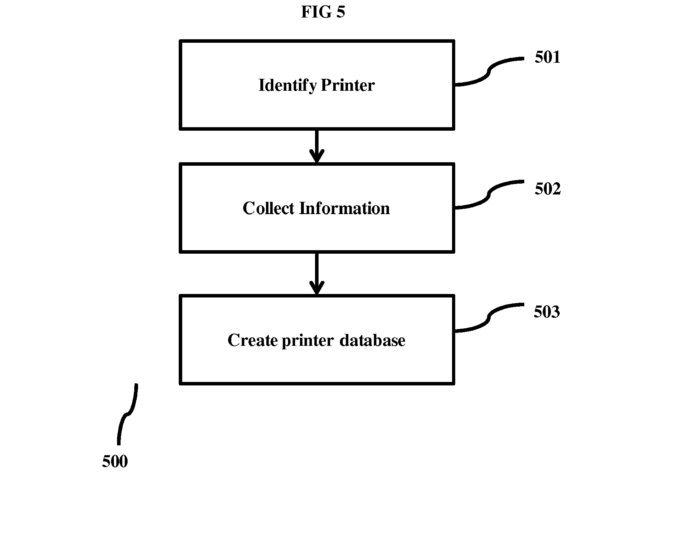

FIG. 5 is a flow diagram which illustrates various steps involved in the process of configuring a printer to the user device, as disclosed in the embodiments herein. In a preferred embodiment, the system may begin configuring printer 104 to the device 101 when a print application is initiated in the device 101. The print application may be manually initiated by the user or may automatically initiate at startup of the user device 101. When the print application is invoked in the user device 101, the system checks and identifies (501) at least one printer from the connected network. The user device 101 and printer 104 may be may be part of the same network or else, the printer 104 may be shared through a computer. Further, the printer 104 and the user device 101 may be having either a wired or a wireless connection to each other. In a preferred embodiment, the printers 104 connected to a network may be identified using corresponding IP address. The printer 104 may also be a Bluetooth printer. Further, the user device 101 may use certain protocols to detect devices connected to the network. For example, protocols like zeroconf and SNMP may be used by the system to identify printers 104 connected to the network.

Further, the system collects (502) information specific to each of the identified printers 104. For example, the system may collect information such as printer Id, type of printer and so on, related to each printer 104. In one embodiment, the printer specific data may be collected in a suitable format such as PPD format. Further, the system creates (503) a database which comprises data on the identified printers 104 and corresponding information. For example, the database may comprise information such as printer name, printer Id, type of printer and so on, retrieved by the system from the network. Further, the user can select a printer from this list of available printers for printing a selected file. In one embodiment, the system may provide the user means for selecting a printer as default printer. Further, the system may use the selected printer 104 for further printing purposes of the user. In another embodiment, the user may be able to change the settings and select another printer 104 for printing operation later. The various actions in method 500 may be performed in the order presented, in a different order or simultaneously. Further, in some embodiments, some actions listed in FIG. 5 may be omitted.

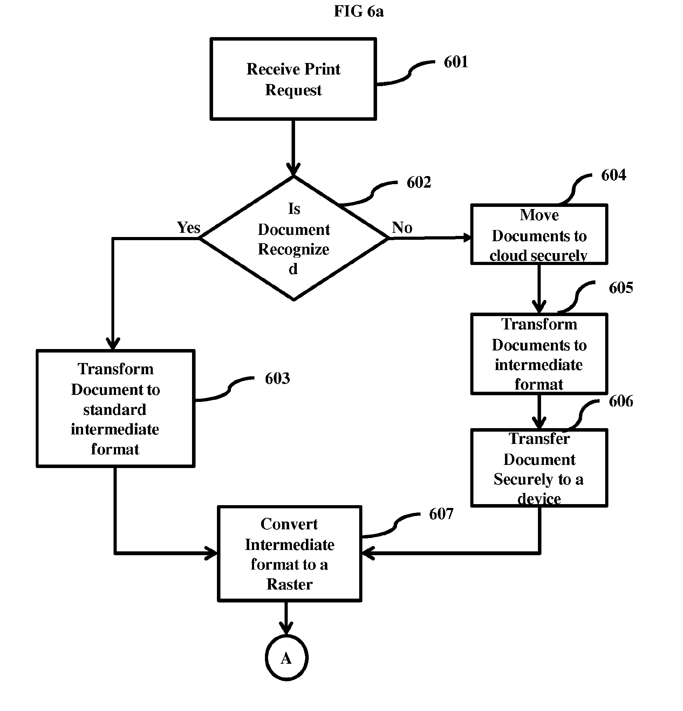

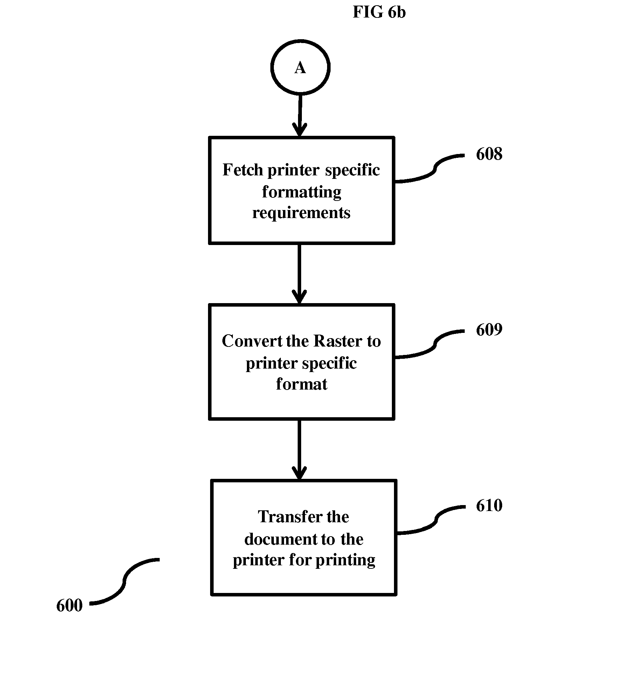

FIGs. 6a and 6b are flow diagrams which illustrate various steps involved in the process of printing a document using a device, as disclosed in the embodiments herein. For printing a selected file, the user initiates a print request using the user device 101. The user may invoke printing request by selecting the file to be printed and by selecting the print option. In one embodiment, the user may select the file to be printed using a suitable application that can invoke the proposed printing mechanism. In another embodiment, the print option may be available in a context menu associated with the file and the user may select print option from the context menu. The print request may be made by selecting the file to be printed and the printer 104 to be used. The printer 104 to be used for printing the document may be selected from the printer database. The system may store the printer database in a suitable location in the user device 101.

Once the system receive (601) the print request from the user device 101, in order to convert the file to a printer readable format, the system converts the file first into an intermediate format. The file conversion to intermediate format may occur within the user device 101 or in a cloud network 105. In a preferred embodiment, an underlying print application in the user device 101 may decide whether the file conversion take place in user device 101 or in the cloud network 105. For this, the application checks (602) if the user device 101 is able to recognize the file to be printed. The system may access the file to be printed using the file path information in the user device 101. In one embodiment, the user device 101 may not be able to recognize the file to be printed. For example, the user device 101 may have to print a PDF file and the user device may not be supporting the PDF files. In this case, the system moves (604) the file to a cloud network 105. Further, the moved file is converted (605) to an intermediate data format in the cloud network 105 by the file convert subsystem 305. Further, the file convert subsystem may use a suitable file conversion tool 306 for converting the file to the intermediate format. In one embodiment, the cloud network 105 may be present within the LAN. The cloud network 105 present in the LAN may give better protection to the data. In another embodiment, the cloud network 105 may be present in the internet 103. Further, the intermediate data may be in the form of a PostScript format. PostScript format of data may be formed by creating images of contents of the received file. Further, the PostScript format of data may comprise Bitmap pixels. By using the PostScript format of the data, printer 104 may be able to print the image even without pixelized representation of the data.

Further, the intermediate data is transferred (606) back to the device. In another embodiment, if the user device 101 is able to recognize the file, the data in the file is transformed (603) to an intermediate format within the user device 101. In one embodiment, the system may implement a way to determine the intermediate format to which the data is to be converted. Further, the intermediate format to which the data is to be converted may depend upon the type of file to be printed.

Further, the intermediate data is stored in the file system in user device 101. Further, the intermediate data is accessed from the file system by print sub system 204. The print sub system 204 converts (607) the intermediate data to from the user device 101 to a raster format. The raster format of data may be comprised of bitmap images of the data.

Further, the system fetches (608) printer specific formatting information. The printer specific formatting information may help the system to determine the format into which the intermediate data is to be converted, so as to make the data readable for the printer. The system may fetch the printer specific formatting information from the printer database being maintained in the user device 101. Further, based on the fetched printer specific information, the print sub system 204 converts (609) the raster data to a printer readable format.

Further the system transfers (610) the data in the printer specific format to the printer. The printer communication layer 403 present in the print sub system 204 selects a suitable communication protocol such as IPP or RAW to facilitate communication between the user device 101 and the printer 104. Upon receiving the data, the printer prints the received information onto a physical (hardcopy) format. The various actions in method 600 may be performed in the order presented, in a different order or simultaneously. Further, in some embodiments, some actions listed in FIG. 6 may be omitted.

The embodiments disclosed herein can be implemented through at least one software program running on at least one hardware device and performing network management functions to control the network elements. The network elements shown in Fig. 3 include blocks which can be at least one of a hardware device, or a combination of hardware device and software module.

The embodiment disclosed herein specifies a system for mobile printing. The mechanism allows mobile printing without the help of a computer providing a system thereof. Therefore, it is understood that the scope of the protection is extended to such a program and in addition to a computer readable means having a message therein, such computer readable storage means contain program code means for implementation of one or more steps of the method, when the program runs on a server or device or any suitable programmable device. The method is implemented in a preferred embodiment through or together with a software program written in e.g. Very high speed integrated circuit Hardware Description Language (VHDL) another programming language, or implemented by one or more VHDL or several software modules being executed on at least one hardware device. The hardware device can be any kind of device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the claims as described herein.

## Claims

1. A method for printing a file from a device, wherein the device does not comprise an application to render the file, the method comprising
converting the file to an intermediate format, if the file is not compatible with the device;
converting the file in the intermediate format to a format compatible with a printer by the device; and
sending the file to the printer by the device.

2. The method, as claimed in claim 1, wherein the method further comprises of authenticating the device.

3. The method, as claimed in claim 1 or 2, wherein the file is converted to an intermediate format by at least one of a cloud network, or the device.

4. The method, as claimed in one of claims 1 to 3, wherein the method further comprises of storing the file in the intermediate format in the device.

5. A device enabled for printing of a file from the device, wherein the device does not comprise an application to render the file, the device configured for
either, sending the file to a further device for conversion into an intermediate format and receiving the file in the intermediate format, if the file is not compatible with the device,
or, converting the file to the intermediate format, if the file is compatible with the device,
converting the file in the intermediate format to a format compatible with a printer;
and
sending the file to the printer.

6. The device, as claimed in claim 5, wherein the device is configured for storing the file in the intermediate format.

7. A cloud network configured for
receiving a file from a device;
converting the file to the intermediate format, on receiving the file from the device;
and
sending the file in the intermediate format to the device.

8. A system comprising the device as claimed in claim 5 or 6 and the cloud network as claimed in claim 7.

9. The system, as claimed in claim 8, wherein the system is further configured for authenticating the device.

10. The system, as claimed in claim 8 or 9, wherein the system is further configured for storing the file in the intermediate format.
